# EUROPEAN PATENT SPECIFICATION

(11) **EP 2 584 154 B1**
(45) Date of publication and mention of the grant of the patent: **09.09.2020**
(21) Application number: 12188417.5
(22) Date of filing: 12.10.2012
(51) Int. Cl.: F01D 25/16, F02C 7/36

(54) **Gas turbine front center body architecture and method of servicing a gas turbine engine**
Aufbau des vorderen Gehäusekörpers einer Gasturbine und Verfahren zur Wartung einer Gasturbine
Architecture de partie avant du corps central d'une turbine à gaz et méthode pour l'entretien d'une turbine à gaz

(30) Priority: 17.10.2011 US 201113275286; 27.10.2011 US 201113282919
(43) Date of publication of application: 24.04.2013
(73) Proprietor: United Technologies Corporation, Farmington, CT 06032 (US)
(72) Inventor: Davis, Todd A., Tolland, CT Connecticut 06084 (US); Cigal, Brian P., Windsor, CT Connecticut 06095 (US)
(74) Representative: Dehns

(56) References cited:
- EP-A2- 2 511 484
- GB-A- 2 320 527
- US-A- 4 744 214
- US-A- 5 433 674
- US-A1- 2009 081 039
- US-A1- 2010 105 516
- US-A1- 2011 130 246

## Description

### BACKGROUND

The present disclosure relates to a gas turbine engine, and in particular, to a case structure therefor.

Gas turbine engines typically include one or more rotor shafts that transfer power and rotary motion from a turbine section to a compressor section and fan section. The rotor shafts are supported within an engine static structure which is typically constructed of modules with individual case sections which are joined together at bolted flanges. The flanges form a joint capable of withstanding the variety of loads transmitted through the engine static structure. An ongoing issue for gas turbine engines is the ease and speed at which they can be serviced.

A gas turbine engine having the features of the preamble of claim 1 is disclosed in US2010/105516 A1. Other gas turbines having gearboxes are disclosed in US2009/0081039 A1, US5433674 A, US2011/130246 A1 and EP 2511484 A1.

### SUMMARY

From a first aspect, the invention provides a gas turbine engine as set forth in claim 1.

From a second aspect, the invention provides a method of servicing a gas turbine engine as set forth in claim 10.

Features of embodiments of the invention are set forth in the dependent claims.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of an embodiment of a gas turbine engine;
Figure 2 is an enlarged cross-section of a portion of the gas turbine engine which illustrates a front center body assembly;
Figure 3 is an enlarged cross-section of the geared architecture of the gas turbine engine;
Figure 4 is an exploded perspective view of a front center body assembly;
Figure 5 is an enlarged perspective partial cross-section of a front center body support of the front center body assembly;
Figure 6 is an enlarged sectional view of the front center body support;
Figure 7 is an exploded view of the front center body support; and
Figure 8 is a schematic view of a forward gearbox removal from the gas turbine engine.

### DETAILED DESCRIPTION

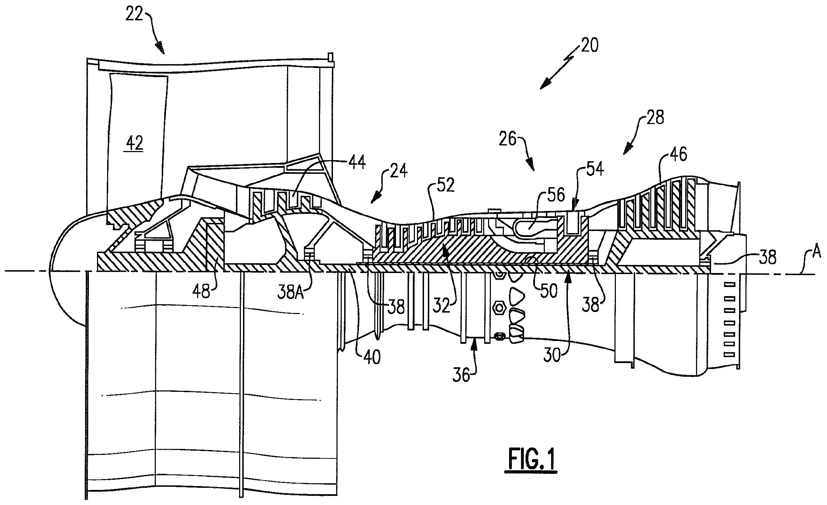

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low spool 30 and a high spool 32 mounted for rotation about an engine central longitudinal axis A relative to an engine static structure 36 via several bearing supports 38. The low spool 30 generally includes an inner shaft 40 that interconnects a fan 42, a low pressure compressor 44 and a low pressure turbine 46. The inner shaft 40 drives the fan 42 through a geared architecture 48 to drive the fan 42 at a lower speed than the low spool 30. The high spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the low pressure compressor 44 then the high pressure compressor 52, mixed with the fuel and burned in the combustor 56, then expanded over the high pressure turbine 54 and low pressure turbine 46. The turbines 54, 46 rotationally drive the respective low spool 30 and high spool 32 in response to the expansion.

The main engine shafts 40, 50 are supported at a plurality of points by the bearing system 38 within the static structure 36. In one non-limiting embodiment, bearing system 38 includes a #2 bearing support 38A located within the compressor section 24.

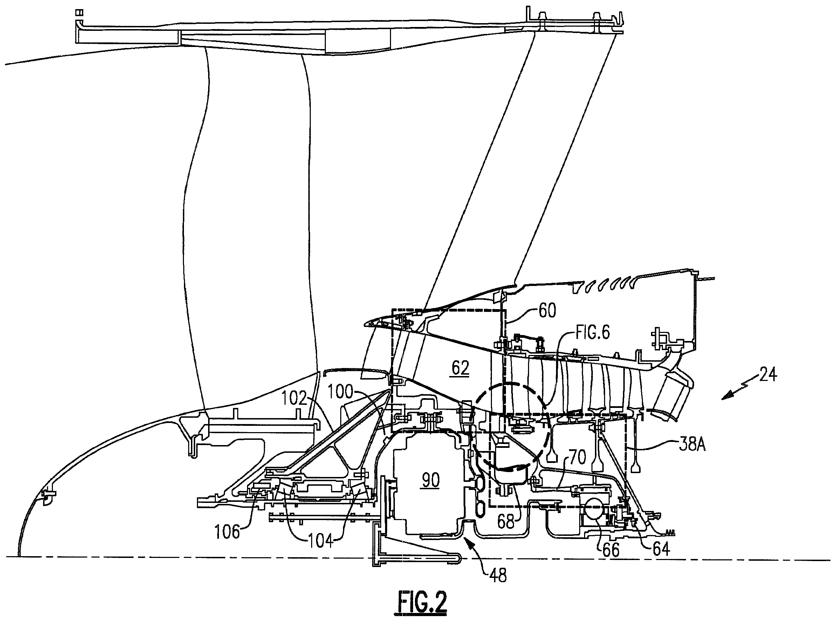

With reference to Figure 2, the engine static structure 36 proximate the compressor section 24 includes a front center body assembly 60 adjacent a #2 bearing support 38A. The front center body assembly 60 generally includes a front center body support 62. The #2 bearing support 38A generally includes a seal package 64, a bearing package 66, a flex support 68 and a centering spring 70.

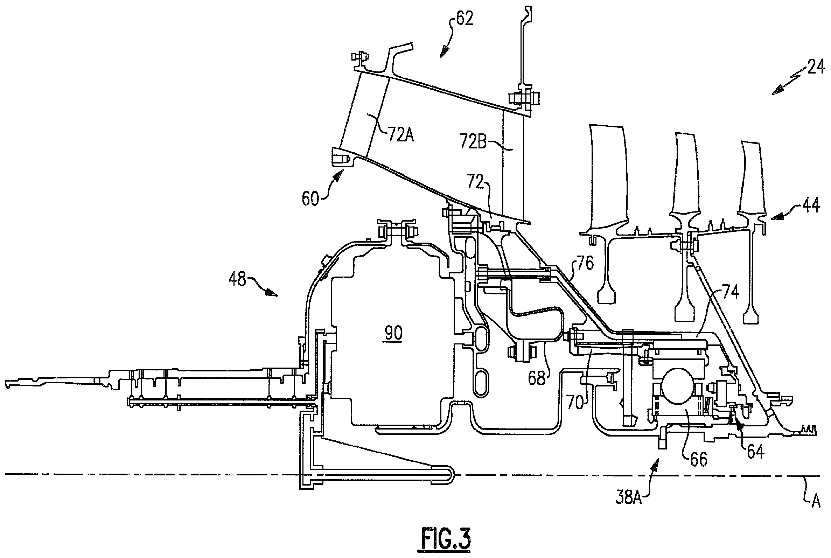

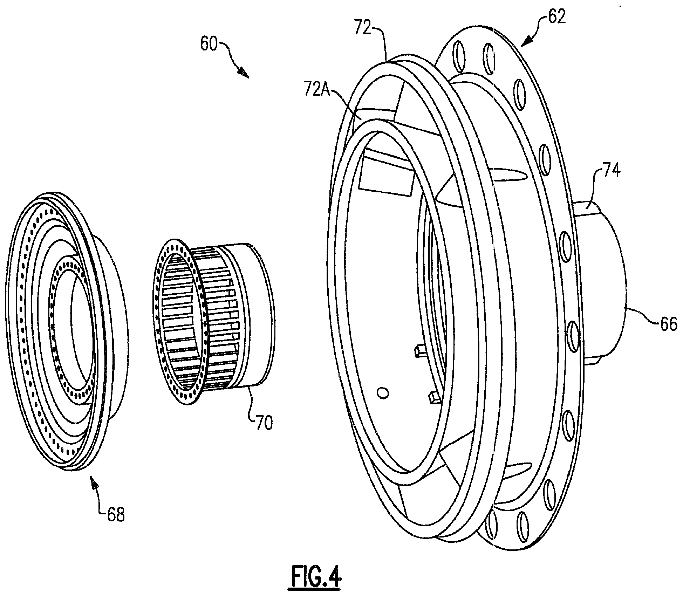

With reference to Figure 3, the flex support 68 provides a flexible attachment of the geared architecture 48 within the front center body support 62 (also illustrated in Figure 4). The flex support 68 reacts the torsional loads from the geared architecture 48 and facilitates vibration absorption as well as other support functions. The centering spring 70 is a generally cylindrical cage-like structural component with a multiple of beams which extend between flange end structures (also illustrated in Figure 4). The centering spring 70 resiliently positions the bearing package 66 with respect to the low spool 30. In one embodiment, the beams are double-tapered beams arrayed circumferentially to control a radial spring rate that may be selected based on a plurality of considerations including, but not limited to, bearing loading, bearing life, rotor dynamics, and rotor deflection considerations.

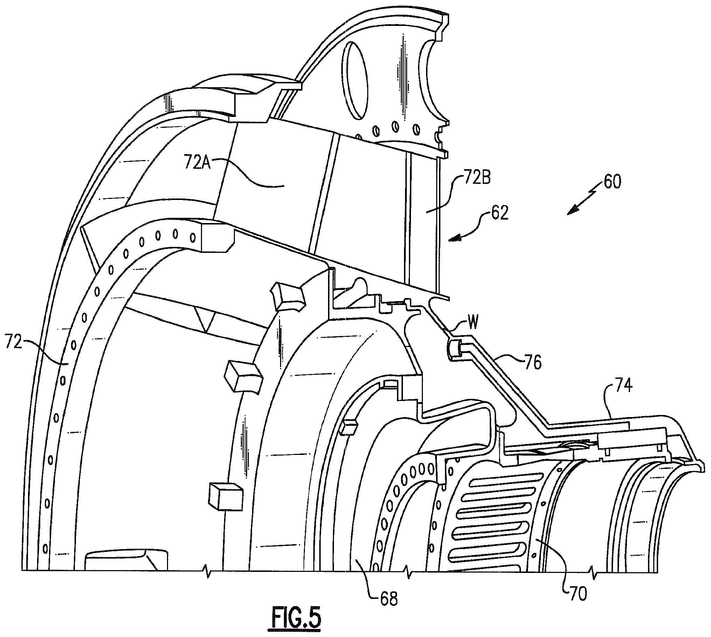

The front center body support 62 includes a front center body section 72 and a bearing section 74 defined about axis A with a frustro-conical interface section 76 therebetween (Figure 5). The front center body section 72 at least partially defines the core flowpath into the low pressure compressor 44. The front center body section 72 includes an annular core passage with a multiple of front center body vanes 72A, 72B. The bearing section 74 is defined radially inward of the front center body section 72. The bearing section 74 locates the bearing package 66 and the seal package 64 with respect to the low spool 30. The frustro-conical interface section 76 combines the front center body section 72 and the bearing section 74 to form a unified load path, substantially free of kinks typical of a conventional flange joint, from the bearing package 66 to the outer periphery of the engine static structure 36. The frustro-conical interface section 76 may include a weld W (Figure 5) or, alternatively, be an integral section such that the front center body support 62 is a unitary component.

The integral, flange-less arrangement of the frustro-conical interface section 76 facilitates a light weight, reduced part count architecture with an increased ability to tune the overall stiffness and achieve rotor dynamic requirements. Such an architecture also further integrates functions such as oil and air delivery within the bearing compartment which surrounds bearing package 66.

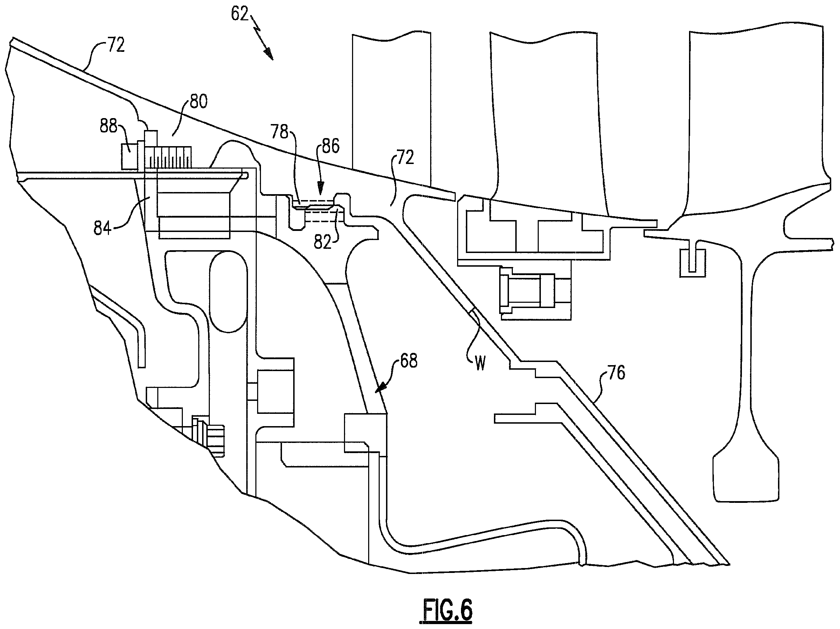

With reference to Figure 6, the front center body support 62 includes mount features to receive the flex support 68. In one disclosed non-limiting embodiment, the mount features of the front center body support 62 includes an internal spline 78 and a radial inward directed fastener flange 80 on the front center body section 72. The flex support 68 includes a corresponding outer spline 82 and radially outwardly directed fastener flange 84. The flex support 68 is received into the front center body support 62 at a splined interface 86 formed by splines 78, 82 and retained therein such that fastener flange 84 abuts fastener flange 80. A set of fasteners 88 such as bolts are threaded into the fastener flanges 80, 84 to mount the flex support 68 within the front center body support 62.

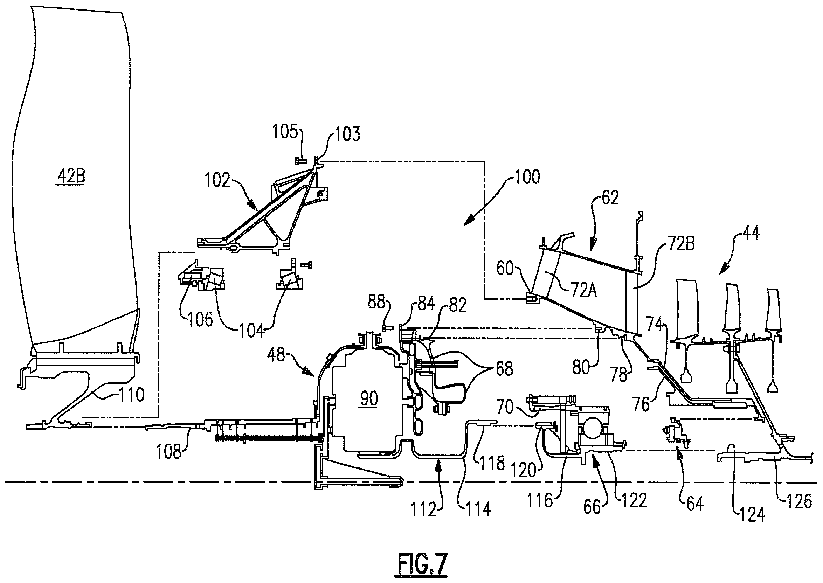

With reference to Figure 7, the fasteners 88 are directed forward to provide access from a forward section of the front center body assembly 60 opposite the bearing package 66 of the number two bearing system 38A. The fasteners 88 are thereby readily removed to access a gearbox 90 of the geared architecture 48.

A front wall 102 aft of the fan 42 is mounted to a forward section of the front center body support 62 to provide access to the geared architecture 48 from the front of the engine 20. The front wall 102 includes a flange 103 mountable to the front center body support 62 at the flange 80 by a multiple of fasteners 105, which fasteners 105 may in one non-limiting embodiment be bolts. The front wall 102 and the front center body support 62 define a bearing compartment 100 (also shown in Figure 2) which mounts to the bearing package 66. The front wall 102 is removable such that the gearbox 90 may be accessed as a module. The gearbox 90 may thereby be accessed to facilitate rapid on-wing service.

It should be appreciated that various bearing structures 104 (illustrated schematically and in Figure 2) and seals 106 (illustrated schematically and in Figure 2) may be supported by the front wall 102 to contain oil and support rotation of an output shaft 108. The output shaft 108 connects with the geared architecture 48 to drive the fan 42. Fan blades 42B extend from a fan hub 110 which are mounted to the output shaft 108 for rotation therewith. It should be appreciated that the bearing structures 104 and seals 106 may, in the disclosed non-limiting embodiment may be disassembled with the front wall 102 as a unit after removal of the fan hub 110.

The gearbox 90 is driven by the low spool 30 (Figure 1) through a coupling shaft 112. The coupling shaft 112 transfers torque through the bearing package 66 to the gearbox 90 as well as facilitates the segregation of vibrations and other transients. The coupling shaft 112 generally includes a forward coupling shaft section 114 and an aft coupling shaft section 116 which extends from the bearing package 66. The forward coupling shaft section 114 includes an interface spline 118 which mates with an aft spline 120 of the aft coupling shaft section 116. An interface spline 122 of the aft coupling shaft section 116 connects the coupling shaft 112 to the low spool 30 through, in this non limiting embodiment, splined engagement with a spline 124 on a low pressure compressor hub 126 of the low pressure compressor 44.

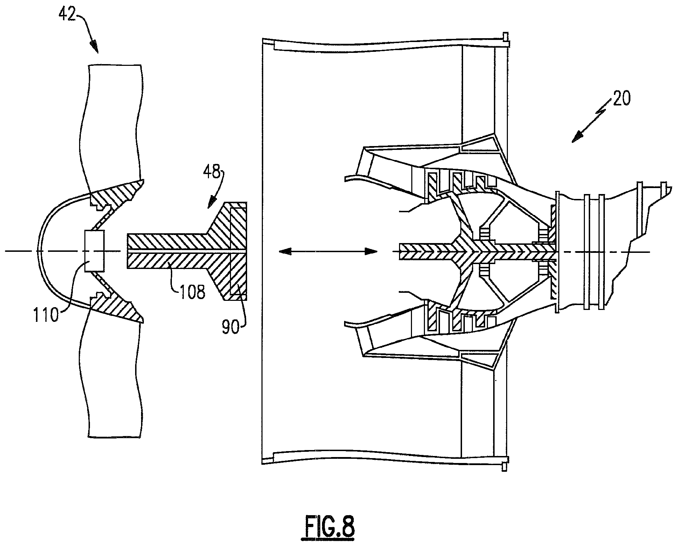

To remove the gearbox 90, the fan hub 110 is disassembled from the output shaft 108. The multiple of fasteners 105 are then removed such that the front wall 102 is disconnected from the front center body support 62. The multiple of fasteners 88 are then removed from the front of the engine 20. The geared architecture 48 is then slid forward out of the front center body support 62 such that the interface spline 118 is slid off the aft spline 120 and the outer spline 82 is slid off the internal spline 78. The geared architecture 48 is thereby removable from the engine 20 as a module (Figure 8; illustrated schematically). It should be appreciated that other componentry may need to be disassembled to remove the geared architecture 48 from the engine 20, however, such disassembly is relatively minor and need not be discussed in detail. It should be further appreciated that other components such as the bearing package 66 and seal 64 are also now readily accessible from the front of the engine 20.

Removal of the gearbox 90 from the front of the engine 20 as disclosed saves significant time and expense. The geared architecture 48, is removable from the engine 20 as a module and does not need to be further disassembled. Moreover, although the geared architecture 48 must be removed from the engine to gain access to the bearing package 66 and the seal 64, the geared architecture 48 does not need to be removed from the engine 20 to gain access to the engine core itself.

It should be understood that like reference numerals identify corresponding or similar elements throughout the several drawings. It should also be understood that although a particular component arrangement is disclosed in the illustrated embodiment, other arrangements will benefit herefrom.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason the appended claims should be studied to determine true scope and content.

## Claims

1. A gas turbine engine comprising:
a gearbox (90) defined along an engine axis;
a front center body support (62) defined around said engine axis;
a bearing support (38A) mounted to the front center body support (62) and comprising a flex support (68) and a bearing package (66) mounted to said front center body support (62);
a low spool (30) operable to drive said gearbox (90); and
a front wall (102) mounted to said front center body support (62), said front wall (102) removable from said front center body support (62) to access said gearbox (90); **characterised in that**:
the bearing support (38A) further comprises a seal package (64) mounted to said front center body support (62), and a centering spring (70) which resiliently positions the bearing package (66) with respect to the low spool (30);
a front body section (72) of the front center body support (62) comprises an internal spline (78) and a radially inward fastener flange (80);
the flex support (68) comprises an outer spline (82) and a radially outwardly directed fastener flange (84); and
the flex support (68) is received into the front center body support (62) at a splined interface (86) formed by the internal spline (78) and the outer spline (82) and retained therein such that the radially outwardly directed fastener flange (84) abuts the radially inward fastener flange (80).

2. The gas turbine engine as recited in claim 1, wherein said front center body support (62) is defined about an engine longitudinal axis, and/or at least partially defines a core flow path.

3. The gas turbine engine as recited in claim 1 or 2, wherein said radially inward fastener flange (80) of said front center body support which abuts a flange (103) of said front wall (102).

4. The gas turbine engine as recited in claim 3, further comprising a multiple of fasteners (105) which attach said flange (103) of said front wall (102) to said radially inward fastener flange (80) of said front center body support (62).

5. The gas turbine engine as recited in claim 4, wherein said multiple of fasteners (105) are accessible from a forward section of the gas turbine engine.

6. The gas turbine engine as recited in any preceding claim, wherein said front wall (102) supports the bearing package (66) to support an output shaft driven by said gearbox (90), and wherein said output shaft is operable to drive a fan (42).

7. The gas turbine engine as recited in any preceding claim, wherein said gearbox (90) drives a fan section (42) at a speed different than a speed of a low speed spool (30).

8. The gas turbine engine as recited in any preceding claim, wherein said gearbox (90) is driven by the low spool (30) through a coupling shaft (112) comprising a forward coupling shaft section (114) and an aft coupling shaft section (116) which extends from the bearing package (66), the forward coupling shaft section (114) including an interface spline (118) which mates with an aft spline (120) of the aft coupling shaft section (116) and an interface spline (122) of the aft coupling shaft section (116) connects the coupling shaft (112) to the low spool (30).

9. The gas turbine engine as recited in claim 8, wherein the aft coupling shaft section (116) connects the coupling shaft (112) to the low spool (30) through a splined engagement with a spline (124) on a low pressure compressor hub (126) of a low pressure compressor 44 of the engine.

10. A method for servicing a gas turbine engine (10) as set forth in claim 1 comprising:
providing access from a forward section of a front center body assembly (60) to said gearbox (90) by disassembling said front wall (102) from said front center body support (62);
providing access from the forward section to the flex support (68), the flex support (68) mounted to the gearbox (90); and
sliding the gearbox forward out of the front center body support (62) such that the outer spline (82) of the flex support (68) is slid off the internal spline (78) of the front center body support (62) .

11. The method as recited in claim 10, further comprising:
disassembling a fan (42) mounted to the geared architecture (48) and/or removing a multiple of fasteners (88) located within the forward section of said front center body assembly (60) to disassemble said front wall (102) from said front center body support (62) of the front center body assembly (60).

12. The method as recited in claim 10, or 11, further comprising:
disassembling said bearing package (66) from said front center body support (62).

13. The method as recited in any of claims 10 to 12, further comprising:
disassembling the front wall (102) from an output shaft driven by the gearbox (90).

## Patentansprüche

1. Gasturbinentriebwerk, das Folgendes umfasst:
ein Getriebe (90), das entlang einer Triebwerksachse definiert ist;
einen Träger (62) eines vorderen mittleren Körpers, der um die Triebwerksachse definiert ist;
einen Lagerträger (38A), der an dem Träger (62) des vorderen mittleren Körpers montiert ist und einen flexiblen Träger (68) und ein Lagerpaket (66), die an dem Träger (62) des vorderen mittleren Körpers montiert sind, umfasst;
eine niedrige Spule (30), die wirksam ist, um das Getriebe (90) anzutreiben; und
eine vordere Wand (102), die an dem Träger (62) des vorderen mittleren Körpers montiert ist, wobei die vordere Wand (102) von dem Träger (62) des vorderen mittleren Körpers entfernt werden kann, um auf das Getriebe (90) zuzugreifen; **dadurch gekennzeichnet, dass**:
der Lagerträger (38A) ferner eine Dichtungspackung (64), die an dem Träger (62) des vorderen mittleren Körpers montiert ist und eine Zentrierfeder (70), die das Lagerpaket (66) in Bezug auf die niedrige Spule (30) elastisch positioniert, umfasst;
ein vorderer Körperbereich (72) des Trägers (62) des vorderen mittleren Körpers eine innere Vernutung (78) und einen sich radial nach innen erstreckenden Befestigungsflansch (80) umfasst;
der flexible Träger (68) eine äußere Vernutung (82) und einen radial nach außen gerichteten Befestigungsflansch (84) umfasst; und
der flexible Träger (68) bei einer genuteten Schnittstelle (86), die durch die innere Vernutung (78) und die äußere Vernutung (82) gebildet wird, in dem Träger (62) des vorderen mittleren Körpers aufgenommen wird und darin zurückgehalten wird, sodass der radial nach außen gerichtete Befestigungsflansch (84) an dem sich radial nach innen erstreckenden Befestigungsflansch (80) anliegt.

2. Gasturbinentriebwerk nach Anspruch 1, wobei der Träger (62) des vorderen mittleren Körpers um eine Triebwerkslängsachse definiert ist und/oder zumindest teilweise einen Kernströmungsweg definiert.

3. Gasturbinentriebwerk nach Anspruch 1 oder 2, wobei der sich radial nach innen erstreckende Befestigungsflansch (80) des Trägers des vorderen mittleren Körpers, der an einem Flansch (103) der vorderen Wand (102) anliegt.

4. Gasturbinentriebwerk nach Anspruch 3, ferner umfassend eine Mehrzahl von Befestigungselementen (105), die den Flansch (103) der vorderen Wand (102) an dem sich radial nach innen erstreckenden Flansch (80) des Trägers (62) des vorderen mittleren Körpers anbringen.

5. Gasturbinentriebwerk nach Anspruch 4, wobei ausgehend von einem Vorderbereich des Gasturbinentriebwerks auf die Mehrzahl von Befestigungselementen (105) zugegriffen werden kann.

6. Gasturbinentriebwerk nach einem der vorhergehenden Ansprüche, wobei die vordere Wand (102) das Lagerpaket (66) trägt, um eine Ausgabewelle zu tragen, die von dem Getriebe (90) angetrieben wird, und wobei die Ausgabewelle wirksam ist, um ein Gebläse (42) anzutreiben.

7. Gasturbinentriebwerk nach einem der vorhergehenden Ansprüche, wobei das Getriebe (90) einen Gebläsebereich (42) mit einer Drehzahl antreibt, die sich von einer Drehzahl einer Spule (30) mit einer niedrigen Drehzahl unterscheidet.

8. Gasturbinentriebwerk nach einem der vorhergehenden Ansprüche, wobei das Getriebe (90) von der niedrigen Spule (30) durch eine Koppelwelle (112) angetrieben wird, die einen Vorderkoppelwellenbereich (114) und einen hinteren Koppelwellenbereich (116), der sich von dem Lagerpaket (66) ausgehend erstreckt, umfasst, wobei der Vorderkoppelwellenbereich (114) eine Schnittstellenvernutung (118) beinhaltet, die zu einer hinteren Vernutung (120) des hinteren Koppelwellenbereichs (116) passt, und wobei eine Schnittstellenvernutung (122) des hinteren Koppelwellenbereichs (116) die Koppelwelle (112) mit der niedrigen Spule (30) verbindet.

9. Gasturbinentriebwerk nach Anspruch 8, wobei der hintere Koppelwellenbereich (116) die Koppelwelle (112) durch einen Nuteingriff mit einer Vernutung (124) an einer Niederdruckverdichternabe (126) eines Niederdruckverdichters 44 des Getriebes mit der niedrigen Spule (30) verbindet.

10. Verfahren zum Warten eines Gasturbinentriebwerks (10) nach Anspruch 1, das Folgendes umfasst:
Bereitstellen eines Zugriffs, ausgehend von einem Vorderbereich einer vorderen mittleren Körperbaugruppe (60), auf das Getriebe (90) durch ein Demontieren der vorderen Wand (102) von dem Träger (62) des vorderen mittleren Körpers;
Bereitstellen eines Zugriffs, ausgehend von dem Vorderbereich, auf einen flexiblen Träger (68), wobei der flexible Träger (68) an das Getriebe (90) montiert ist; und
Verschieben des Getriebes nach vorn und heraus aus dem Träger (62) des vorderen mittleren Körpers, sodass die äußere Vernutung (82) des flexiblen Trägers (68) aus der inneren Vernutung (78) des Trägers (62) des vorderen mittleren Körpers geschoben wird.

11. Verfahren nach Anspruch 10, ferner umfassend:
Demontieren eines Gebläses (42), das an der Getriebearchitektur (48) montiert ist und/oder Entfernen einer Mehrzahl von Befestigungselementen (88), die sich innerhalb des Vorderbereichs der vorderen mittleren Körperbaugruppe (60) befinden, um die vordere Wand (102) von dem Träger (62) des vorderen mittleren Körpers der vorderen mittleren Körperbaugruppe (60) zu demontieren.

12. Verfahren nach Anspruch 10 oder 11, ferner umfassend:
Demontieren des Lagerpakets (66) von dem Träger (62) des vorderen mittleren Körpers.

13. Verfahren nach einem der Ansprüche 10 bis 12, ferner umfassend:
Demontieren der vorderen Wand (102) von einer Ausgabewelle, die von dem Getriebe (90) angetrieben wird.

## Revendications

1. Moteur à turbine à gaz comprenant :
une boîte de vitesse (90) définie le long d'un axe du moteur ;
un support de corps central avant (62) défini autour dudit axe du moteur ;
un support de palier (38A) monté sur le support de corps central avant (62) et comprenant un support flexible (68) et une garniture de palier (66) montés sur ledit support de corps central avant (62) ;
une bobine inférieure (30) permettant d'entraîner ladite boîte de vitesse (90) ; et
une paroi avant (102) montée sur ledit support de corps central avant (62), ladite paroi avant (102) pouvant être retirée dudit support de corps central avant (62) pour accéder à ladite boîte de vitesse (90) ; **caractérisé en ce que** :
le support de palier (38A) comprend en outre une garniture d'étanchéité (64) montée sur ledit support de corps central avant (62), et un ressort de centrage (70) qui positionne de manière élastique la garniture de palier (66) par rapport à la bobine inférieure (30) ;
une section de corps avant (72) du support de corps central avant (62) comprend une cannelure interne (78) et une bride de fixation radialement vers l'intérieur (80) ;
le support flexible (68) comprend une cannelure externe (82) et une bride de fixation dirigée radialement vers l'extérieur (84) ; et
le support flexible (68) est reçu dans le support de corps central avant (62) au niveau d'une interface cannelée (86) formée par la cannelure interne (78) et la cannelure externe (82) et est maintenu à l'intérieur de celui-ci de sorte que la bride de fixation dirigée radialement vers l'extérieur (84) vient en butée contre la bride de fixation radialement vers l'intérieur (80).

2. Moteur à turbine à gaz selon la revendication 1, dans lequel ledit support de corps central avant (62) est défini autour d'un axe longitudinal du moteur, et/ou définit au moins partiellement un chemin d'écoulement central.

3. Moteur à turbine à gaz selon la revendication 1 ou 2, dans lequel ladite bride de fixation radialement vers l'intérieur (80) dudit support de corps central avant vient en butée contre une bride (103) de ladite paroi avant (102).

4. Moteur à turbine à gaz selon la revendication 3, comprenant en outre une pluralité d'éléments de fixation (105) qui fixent ladite bride (103) de ladite paroi avant (102) à ladite bride de fixation radialement vers l'intérieur (80) dudit support de corps central avant (62).

5. Moteur à turbine à gaz selon la revendication 4, dans lequel ladite pluralité d'éléments de fixation (105) sont accessibles à partir d'une section avant du moteur à turbine à gaz.

6. Moteur à turbine à gaz selon une quelconque revendication précédente, dans lequel ladite paroi avant (102) soutient la garniture de palier (66) pour soutenir un arbre de sortie entraîné par ladite boîte de vitesse (90), et dans lequel ledit arbre de sortie permet d'entraîner une soufflante (42).

7. Moteur à turbine à gaz selon une quelconque revendication précédente, dans lequel ladite boîte de vitesse (90) entraîne une section de soufflante (42) à une vitesse différente d'une vitesse d'une bobine à basse vitesse (30).

8. Moteur à turbine à gaz selon une quelconque revendication précédente, dans lequel ladite boîte de vitesse (90) est entraînée par la bobine inférieure (30) par l'intermédiaire d'un arbre d'accouplement (112) comprenant une section d'arbre d'accouplement avant (114) et une section d'arbre d'accouplement arrière (116) qui s'étend à partir de la garniture de palier (66), la section d'arbre d'accouplement avant (114) comportant une cannelure d'interface (118) qui s'accouple avec une cannelure arrière (120) de la section d'arbre d'accouplement arrière (116) et une cannelure d'interface (122) de la section d'arbre d'accouplement arrière (116) relie l'arbre d'accouplement (112) à la bobine inférieure (30).

9. Moteur à turbine à gaz selon la revendication 8, dans lequel la section d'arbre d'accouplement arrière (116) relie l'arbre d'accouplement (112) à la bobine inférieure (30) en prise cannelée avec une cannelure (124) sur un moyeu de compresseur basse pression (126) d'un compresseur basse pression 44 du moteur.

10. Procédé d'entretien d'un moteur à turbine à gaz (10) selon la revendication 1, comprenant :
la fourniture d'un accès, à partir d'une section avant d'un ensemble corps central avant (60), à ladite boîte de vitesse (90) en démontant ladite paroi avant (102) dudit support de corps central avant (62) ;
la fourniture d'un accès, à partir de la section avant, au support flexible (68), le support flexible (68) étant monté sur la boîte de vitesse (90) ; et
le coulissement de la boîte de vitesse vers l'avant et en dehors du support de corps central avant (62) de sorte que la cannelure externe (82) du support flexible (68) coulisse en dehors de la cannelure interne (78) du support de corps central avant (62).

11. Procédé selon la revendication 10, comprenant en outre :
le démontage d'une soufflante (42) montée sur l'architecture à engrenages (48) et/ou le retrait d'une pluralité d'éléments de fixation (88) situés à l'intérieur de la section avant dudit ensemble corps central avant (60) pour démonter ladite paroi avant (102) dudit support de corps central avant (62) de l'ensemble corps central avant (60).

12. Procédé selon la revendication 10 ou 11, comprenant en outre :
le démontage de ladite garniture de palier (66) dudit support de corps central avant (62).

13. Procédé selon l'une quelconque des revendications 10 à 12, comprenant en outre :
le démontage de la paroi avant (102) d'un arbre de sortie entraîné par la boîte de vitesse (90).
